Europäisches Patentamt

European Patent Office

Office européen des brevets

(11) Publication number: **0 116 650**
**B1**

# EUROPEAN PATENT SPECIFICATION

(45) Date of publication of patent specification: **23.05.90**

(51) Int. Cl.⁵: **H 04 N 1/32,** H 04 L 13/00

(21) Application number: **83902699.4**

(22) Date of filing: **30.08.83**

(86) International application number:
**PCT/JP83/00280**

(87) International publication number:
**WO 84/01075 15.03.84 Gazette 84/07**

(54) FACSIMILE TRANSMISSION CONTROL SYSTEM.

(30) Priority: **30.08.82 JP 1503/83**

(43) Date of publication of application:
**29.08.84 Bulletin 84/35**

(45) Publication of the grant of the patent:
**23.05.90 Bulletin 90/21**

(84) Designated Contracting States:
**DE FR GB**

(56) References cited:
| | |
|---|---|
| **DE-A-3 017 938** | **JP-A-51 036 010** |
| **JP-A- 536 504** | **JP-A-55 110 467** |
| **JP-A-5 136 010** | **JP-A-56 164 676** |
| **JP-A-5 563 166** | **US-A-3 614 319** |
| **JP-A-49 130 603** | **US-A-4 153 916** |

**JAPAN TELECOMMUNICATION REVIEW, vol.
21, no. 3, JulY 1979, pages 218-224, Tokyo, JP;
M. ORII et al.: "A new model small-size facsimile
- mini fax -"**

(73) Proprietor: **FUJITSU LIMITED**
**1015, Kamikodanaka Nakahara-ku
Kawasaki-shi Kanagawa 211 (JP)**

(72) Inventor: **IIZUKA, Yoshio**
**3634-501, Sugao Miyamae-ku, Kawasaki-shi
Kanagawa 213 (JP)**
Inventor: **MATSUNAGA, Shigeo**
**307-2-D-401, Minesawa-cho
Hodogaya-ku, Yokohama-shi Kanagawa 240 (JP)**

(74) Representative: **Skone James, Robert Edmund
et al
GILL JENNINGS & EVERY 53-64 Chancery Lane
London WC2A 1HN (GB)**

## Description

Technical Field

The present invention relates to a transmission control system used in a facsimile transmission system, more particularly to the transmission control system having different improved control codes which are necessary during the transmission so that it achieves shortened transmission time.

Background Art

Conventional standard high-speed facsimile transmissions have been performed by using G3 transmission control procedures based on CCITT recommendations. The T.30 transmission control procedure used in G3 is constituted by the control code division transmitted by the transmission speed of 300 bps (bits per second), and by the image data division transmitted by the transmission speed of 9600 bps. In such a transmission method, the image data division is used with the MR data compression method, and the transmission time is shortened by enlarging the K parameter (insertion pitch of the MH data compression method). However, since this transmission method cannot shorten the transmission time of the control code division, it has the limitation of the facsimile transmission speed.

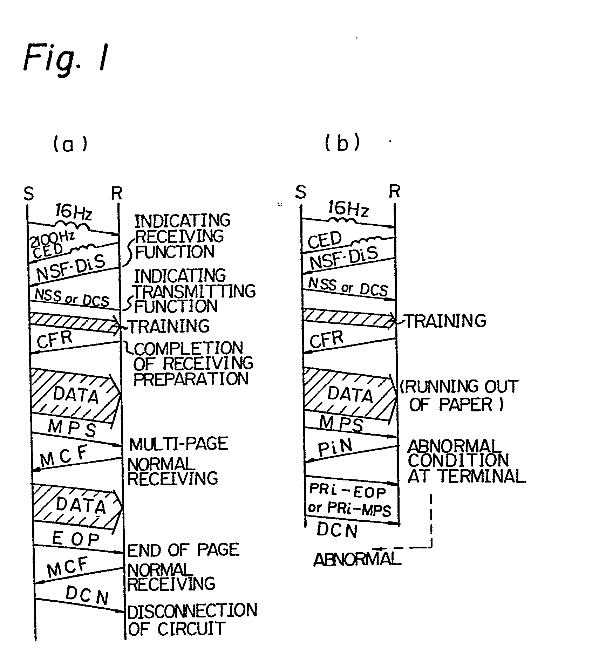

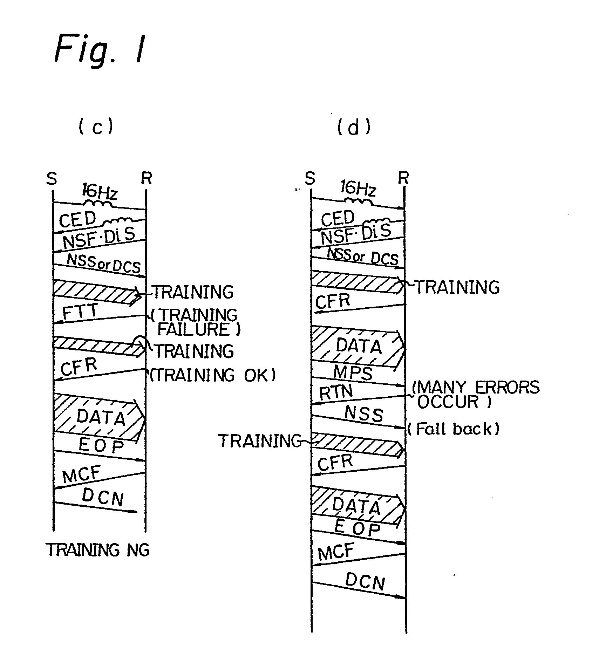

Figures 1(a) to (d) illustrate the operation procedure based on the conventional G3 procedure. Figure 1(a) shows the normal operation procedure, Fig. 1(b) shows an end procedure by an abnormal operation caused by running out of the receiving paper, Fig. 1(c) shows a retraining operation procedure caused by the failure of the training, and Fig. 1(d) shows a data retransmitting operation procedure caused by the occurrence of many errors in the image data. These operations are explained briefly hereinafter. In the drawings, the wavy arrow mark indicates the tonal signal (sine wave signal, 2100 Hz at the G3 procedure), and the straight arrow mark indicates the command code or response code according to the series code method based on the transmission speed of 300 bps. Moreover, the slanted arrow mark indicates the transmission of the image data based on the transmission speed of 9600 bps. Reference letter "S" shows the transmission side of the facsimile system, and "R" shows the receiving side.

(a): Normal operation procedure

When the 16 Hz calling signal is transmitted from the S side to the R side, the R side responds to the S side by the 2100 Hz tonal signal CED. In succession, the R side responds to the S side by the response code NSF·DIS (NSF indicates the non-standard procedure) indicating the receiving function such as paper size, compression method, and recording speed by using 300 bps. The S side transmits the command code NSS or DCS (NSS indicates the non-standard operation, and DCS indicates the standard operation) as the control signal indicating the transmitting function, in succession, the S side switches the modem from 300 bps to 9600 bps, and transmits the training data having an "0" signal during the predetermined term. In the R side, when the training data is received as the normal "0" signal, the R side transmits the response code CFR, indicating completion of the receiving preparation to the signal. According to the response code CFR, the S side transmits one page's amount of the image data by using 9600 bps transmission speed, in succession, it transmits the command code MPS indicating continuation to the next page. In this case, since the image data is normally received by the R side, the R side responds to the S side by the response code MCF, indicating normal reception. The S side transmits the image data of the next page and the command code EOP indicating the end of the page to the R side. When the R side confirms normal reception of the image data, the R side responds to the S side by the response code MCF, and the S side transmits the command code DCN, indicating the disconnection of the circuit and the end of transmission.

(b): Abnormal operation procedure

When the image data have been transmitted from the S side to the R side, if the R side cannot normally receive the image data because of a running out of the receiving paper, the R side responds to the S side by the response code PIN, indicating an abnormal condition of the terminal. The S side transmits the response code PRI-EOP or PRI-MPS indicating the operator call to the R side, and outputs an alarm by using the operator call, in order to show an abnormal condition, and again transmits the response code DCN, indicating the disconnection of the circuit and the end of transmission.

(c): Retraining operation procedure caused by failure of the training

When the training data cannot be received normally by the R side, the R side responds to the S side by the response code FTT, indicating failure of the training, and the S side again transmits the training data. When the training data can be received normally by the R side, the R side responds to the S side by the response code CFR, indicating completion of the receiving preparation, and after this time, the normal operation procedure shown in item (a) is performed from the S side to the R side.

(d): Retransmitting operation procedure caused by the occurrence of many errors in the image data

When the image data received by the R side contain many errors, over a predetermined amount, the R side responds to the S side by the response code RTN. The S side changes the transmission speed of the image data of the next page from 9600 bps to 7200 bps, and informs the R side by the command code NSS, indicating non-standard operation. After that, the S side again transmits the training data to the R side, and the R side performs the normal operation procedure shown in Item (a) after responding to the S side by the response code CFR.

US-A-3614319, US-A-4153916 and a paper entitled "A new model small-sized facsimile-minifax" in JAPAN TELECOMMUNICATION REVIEW, vol. 21, No. 3, July 1979, pages 218-224, Tokyo, JP; M.ORII et al, describe facsimile systems and methods for controlling such systems in which the method comprises causing the transmitting side facsimile device to transmit a calling signal for calling the receiving side facsimile device; causing the receiving side device to issue a response signal indicating a receiving function and the completion of preparation by the receiving side to receive data; and when the transmitting side device receives the response signal within a predetermined time after the transmitting side transmitted the calling signal, causing the transmitting side facsimile device to transmit to the receiving side, in succession, a control signal indicating a transmitting function and image data.

The above mentioned methods, such as the conventional G3 procedure, are performed by exchanging many different command codes and response codes according to a low transmission speed of 300 bps, therefore, the necessary time for transmitting these codes takes several tens of seconds, and takes about one-sixth of the overall transmission time. Moreover, the conventional G3 procedures have problems, in that it is necessary that the training time from 1 to 2 seconds, and the retransmission when many errors occur is performed after transmission of one page's amount of image data, so that the transmission time is considerably wasted.

DE-A-3017938 illustrates a facsimile transmission device and a method of encoding image data to be sent.

This is not concerned, however, with the passing of control signals prior to the sending of image data.

In accordance with one aspect of the present invention, a method of controlling transmission of data in a facsimile system comprising a transmitting side facsimile device and a receiving side facsimile device comprises causing the transmitting side facsimile device to transmit a calling signal for calling the receiving side facsimile device; causing the receiving side device to issue a response signal indicating a receiving function and the completion of preparation by the receiving side to receive data; and when the transmitting side device receives the response signal within a predetermined time after the transmitting side transmitted the calling signal, causing the transmitting side facsimile device to transmit to the receiving side, in succession, a control signal indicating a transmitting function and image data and is characterised in that the response signal is constituted by a composite signal consisting of a plurality of frequencies.

In accordance with a second aspect of the present invention, a facsimile transmission and receiving device comprises a reading section for reading an image to be transmitted, for storing it temporarily and for band-compressing data representing the image based on a predetermined compression method to generate transmitting image data, a receiving recording section for band-expanding received image data and for storing it temporarily and for recording it as the received image, a buffer memory for storing the transmitting image data and the received image data one page at a time, a modem for transmitting the image data from the buffer memory to a circuit coupled with a remote device or from the circuit to the buffer memory under a predetermined transmission speed, a network control unit for controlling circuit connection, circuit disconnection, and automatic dialling, and a control device for detecting transmission errors and for generating and processing command and response signals for controlling the transmitting and receiving of data, and is characterised in that the device further comprises an MF transceiver for handling response signals in the form of a plurality of frequencies.

The present invention simplifies the transmission control procedure used in a facsimile transmission system by using improved response codes which can decrease the exchange of codes as compared with the conventional transmission control procedure, thus shortening the transmission time, and achieving a high-speed facsimile transmission.

Normally, when the transmitting side does not receive the response signal from the receiving side within a predetermined time the transmitting side transmits again only the control signal to the receiving side.

It is possible to considerably simplify the transmission control procedure without interfering with the performance of the facsimile system. Moreover, it is possible to shorten the transmission time to five to six seconds compared with the conventional six to fifteen seconds of transmission time, whereby performing a high-speed facsimile transmission. Moreover, since less loads for the hardware and software are necessary, and communication costs can be decreased considerably, there is a large economical effect.

Brief Description of the Drawings

In the drawings:

Figs. 1(a) to (d) show a facsimile transmission control procedure according to the conventional G3 transmission procedure;

Fig. 2 shows a schematic block diagram of a facsimile system according to an embodiment of the present invention;

Fig. 3 shows a block diagram of a network control unit, an MF transceiver, and a control device shown in Fig. 2;

Figs. 4(a) to (e) show a facsimile transmission control procedure according to an embodiment of the present invention;

Fig. 5 shows a waveform chart of signal timing used in a facsimile transmission procedure of the present invention compared with the waveform of a conventional procedure; and

Figs. 6 and 7 show the flowcharts of the transmission control procedure of the device shown in Fig. 3.

Best Mode of Carrying Out the Invention

Hereinafter, a facsimile transmission control system according to an embodiment of the present invention will be explained in detail with the accompanying drawings.

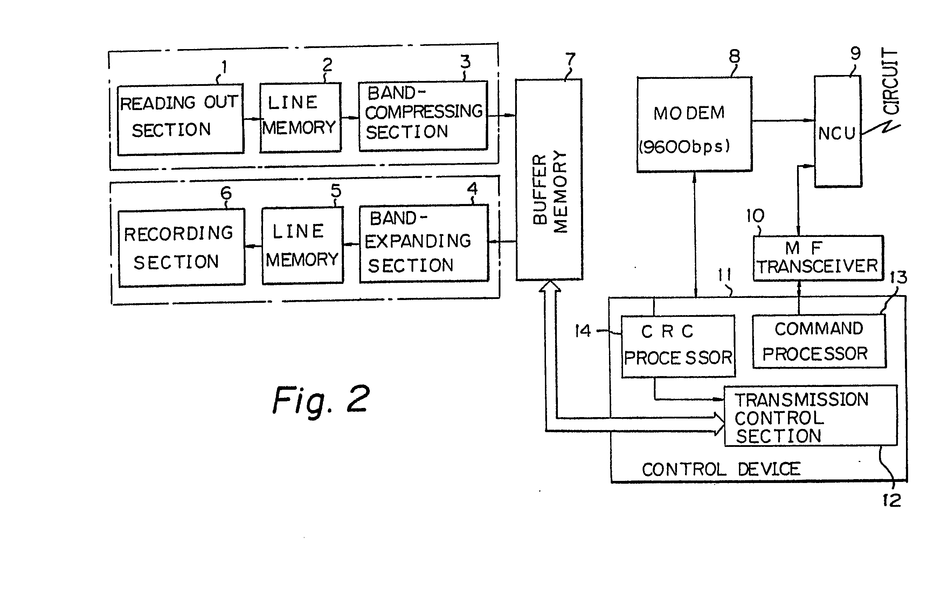

Referring to Fig. 2, a transmitting reading section indicated by a chain dotted line is constituted by a reading section 1, a line memory 2, and a band-compressing section 3, and a receiving recording section indicated by a chain dotted line is constituted by a band-expanding section 4, a line memory 5, and a recording section 6. The reference numeral 7 shows, a buffer memory, 8 shows a modem, 9 shows a network control unit (NCU), 10 shows an MF transceiver, 11 shows a control device, 12 shows a transmission control section, 13 shows a command processor, and 14 shows a cyclic redundancy check processor (CRC). Each component shown by reference numerals 1 to 6 is the same component as shown in the conventional facsimile transmission control system.

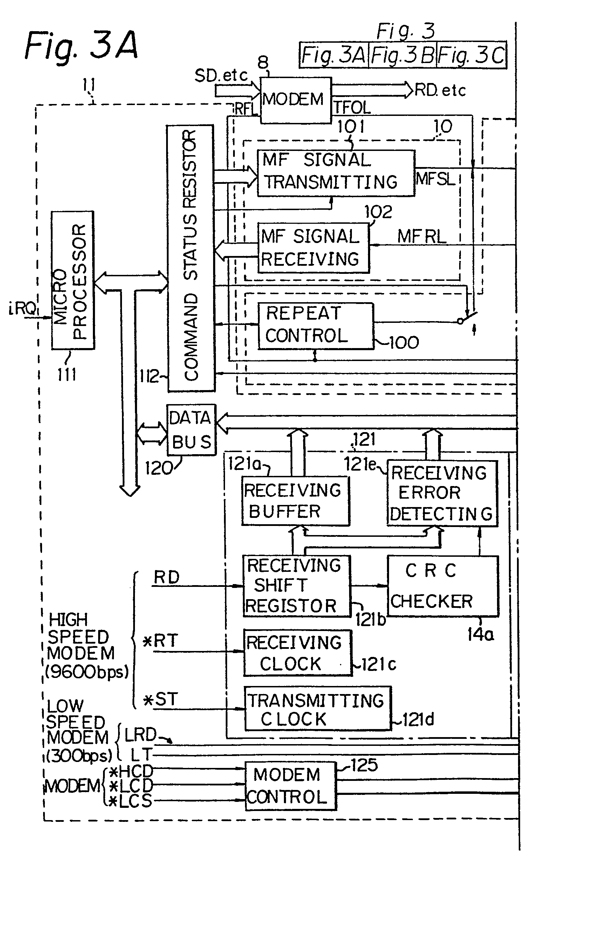

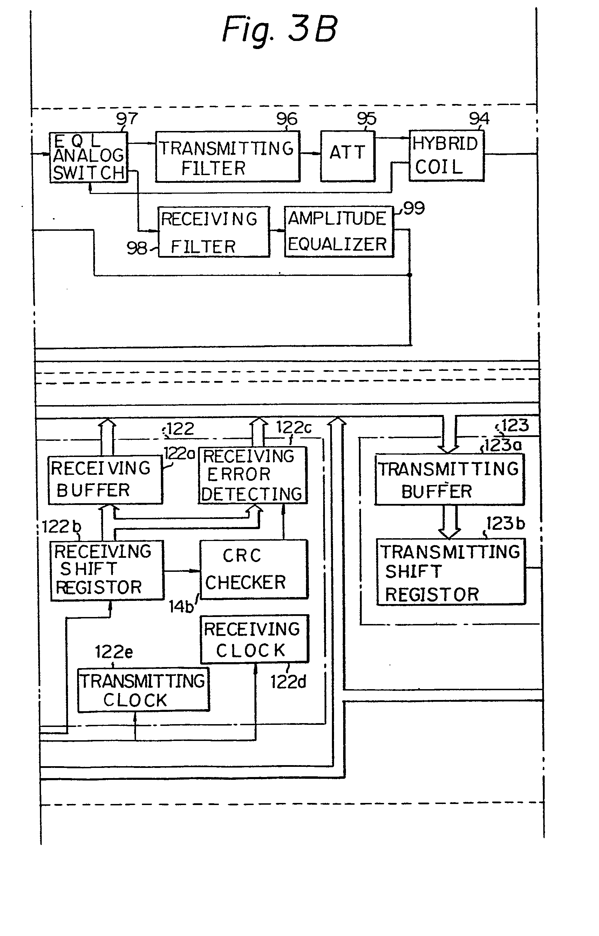

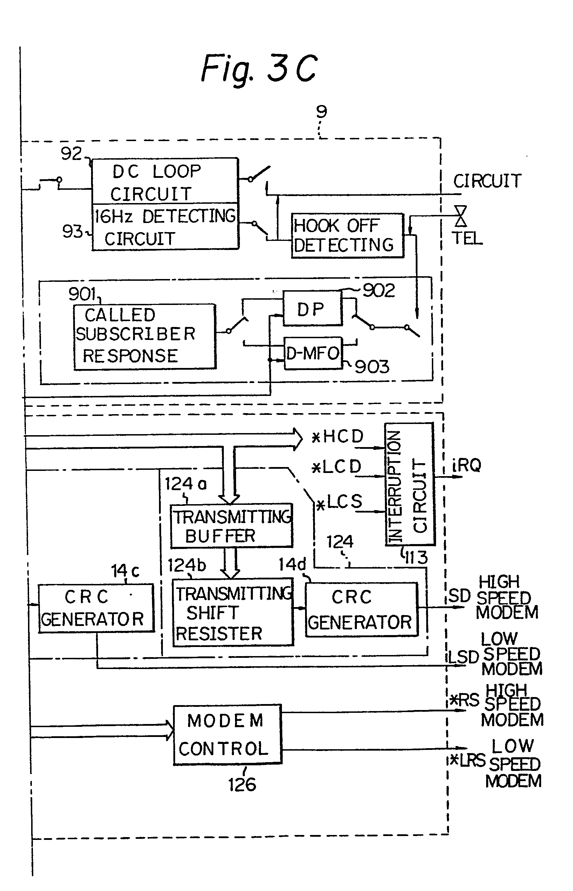

Referring to Fig. 3, the network control unit 9 is constituted by a hook-off detecting circuit 91, a DC loop circuit 92, a 16 Hz detecting circuit 93, a hybrid coil 94, an attenuator (ATT) 95, a transmission filter 96, an EQL analog switch 97, a reception filter 98, an amplitude equalization circuit 99, a repeat control 100, and an automatic dialing section 90 comprising a called subscriber response detecting circuit 901, DP 902, and D-MFO 903.

The MF transceiver 10 is constituted by a MF signal transmitting section 101 and a MF signal receiving section 102.

The control device 11 is constituted by a command processor 13 controlled by a microprocessor 111, a command status register 112, an interruption circuit 113, a CRC processor 14 comprising high speed and low speed CRC checkers 14a, 14b, and high speed and low speed CRC generators 14c, 14d, and a transmission control section 12 comprising high speed (9600 bps) and low speed (300 bps) receiving buffers 121a, 122a, receiving error detecting sections 121e, 122e, receiving shift registers 121b, 122b, receiving clocks 121c, 122d, transmitting clocks 121d, 122e, transmitting buffers 123a, 124a, transmitting shift registers 123b, 124b, and modems 125, 126.

In accordance with these structures, the present invention will be explained in more detail with reference to Figs. 2 and 3.

The buffer memory 7 is a memory for storing temporarily the compressed and coded data of the image data, and it can store the image data transmitted from the band-compressing section 3 based on the image data read from the reading section 1, or can store the image data received from the other facsimile system with every one page's amount. The control of the buffer memory 7 is performed by the transmission control section 12.

The modem 8 can control the switching of a high-speed transmission (9600 bps) or a low-speed transmission based on a high carrier detecting signal (*HCD, *: negative logic), a low carrier detecting signal (*LCD), and a low clear-to-send signal (*LCS). These signals are transmitted from the receiving side facsimile, and can transmit the transmitting data (SD) from the buffer memory 7 to the network, or transmit the receiving data (RD) from the network to the buffer memory 7, by using 9600 bps transmission speed when controlled for high speed transmission.

In the network control unit (NCU) 9, the automatic dialing section 90 is activated by operating the keyboard provided to the operating panel (not shown) based on control of the microprocessor 111, and the receiving side facsimile is called by the 16 Hz calling signal using the pushphone or dial phone. The receiving side facsimile responds to the transmitting side facsimile by the response signal (SCED) indicating the receiving function and the completion of the receiving preparation if the receiving side facsimile is provided with the facsimile system according to the present invention. The signal SCED transmits to the MF type signal receiving section 102 of the MF transceiver 10 as the MFRL signal via the hybrid coil 94 switching of transmitting/receiving base on the half duplex transmission method, the EQL analog switch 97, the receiving filter 98, and the amplitude equalization circuit 99 equalizing the delay time. As mentioned above, NCU 9 has functions such as the control of setting or cutting the network to the receiving side facsimile, and automatic dialing to the remote terminal.

MF transceiver 10 is constituted by MF signal transmitting section 101 and MF signal receiving section 102, and transmits the MFSL signal after converting from the command (except for NSS) sent by the command processor 13 to MF type signal, and receives the response or command (except for NSS) of MF type signal as MFRL signal, and applies these signals to the command processor 13 controlled by the microprocessor 111. The MF signal is constituted by a composite signal consisting of a plurality of a single tone of each having a different frequency, and it is selected by one kind of each high and low frequency band from within three kinds of high frequency bands and four kinds of low frequency bands.

The command processor 13 generates the following signals as the response signal, i.e., SCED (indicates four sets of signals; for example, paper size A4 or B4 as receiving paper size, floppy disk or paper as receiving medium type), SMPS (multi pages), SEOP (end of page), SMCF (normal receiving), SPiP (end of paper, running out of paper), SPiN (abnormal receiving at terminal), SDCN (circuit disconnect), and SREP (request for retransmission), and supply the command code or response code corresponding to the receiving side to the receiving side facsimile according to the control condition of the transmission control section 12, and, moreover, informs the signal analyzed from the command or response code responded from the receiving side to the transmission control section 12. The transmission control section 12 is provided with a receiving section 121 for the high speed modem, a receiving section 122 for the low speed modem, a transmitting section 123 for the low speed modem, and a transmitting section 124 for the high speed modem, moreover, it is provided with CRC checkers 14a, 14b for error detecting and error correcting by every frame in the receiving sections 121, 122, and CRC generators 14c, 14d for adding CRC code to data in the transmitting section 123, 124. Meanwhile, the transmission control section 12 of the receiving side does not respond to the SCED signal within a predetermined term (for example, within 3 second) if it is used by a conventional type facsimile system or another firm's product. In this case, the control section 12 of the transmitting side is applied to the low receive data (LRD) signal of 300 bps and the low timing (LT) signal to its receiving section 122, at the same time, a low carrier detect (*CD) and low clear-to-send (*CS) signals are applied to the modem control section 125, and these signals are applied to the interruption circuit 113, and the interruption circuit 113 supplies the interrupting signal iRQ to the microprocessor 111 as an abnormal condition of the receiving side. The microprocessor 111 controls the receiving section 122 and the transmitting section 123 according to the iRQ signal, and judges the receiving side as the conventional facsimile or another firm's product, and transmits the signal to the receiving side based on the conventional G3 transmission procedure. Of course, if the receiving side is used by the facsimile system according to the present invention, a SCED signal is transmitted from the transmitting side to the receiving side, and transmitted to the command status register 112 via NCU 9 of the receiving side. The command status register 112 controls the modem 8 and NCU 9 based on the binary data obtained from the MF signal receiving section 102, and the microprocessor 111 controls the transmission procedure based on this binary data. As mentioned above, all command and response codes, except for NSS, are transmitted and received by the MF transceiver 10. Meanwhile, an NSS command is constituted by transmitting a message together with the transmitting of image data in the transmission control section 12 when it is transmitted, and separated from the receiving message when it is received.

The CRC processor 14 generates the CRC code (cyclic redundancy check code) and adds the CRC code to the image data whenever the processor 14 transmits the image data by every frame unit (for example, 1 k byte), and performs an error check of the image data at every frame unit based on the CRC code whenever the processor 14 receives the image data. If the processor 14 detects a data error, the data error is informed to the transmission control section 12, which transmits the request for retransmission of the same frame (transmits command SREP). According to the above mentioned procedure, the training based on conventional G3 procedure is not necessary.

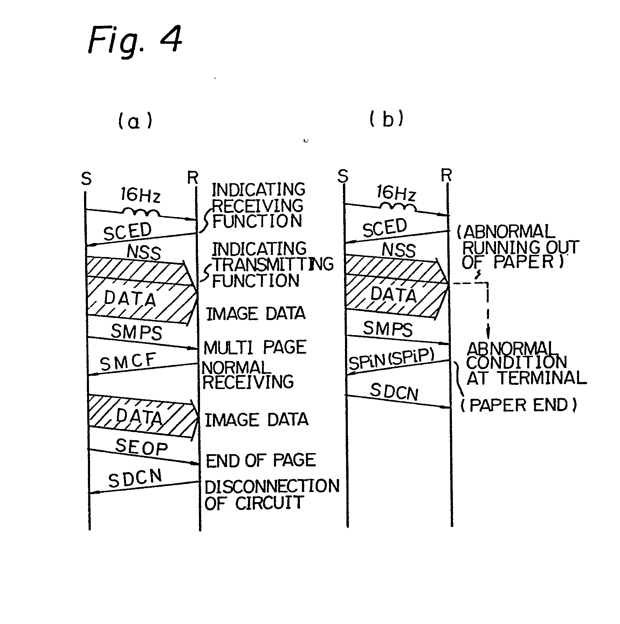

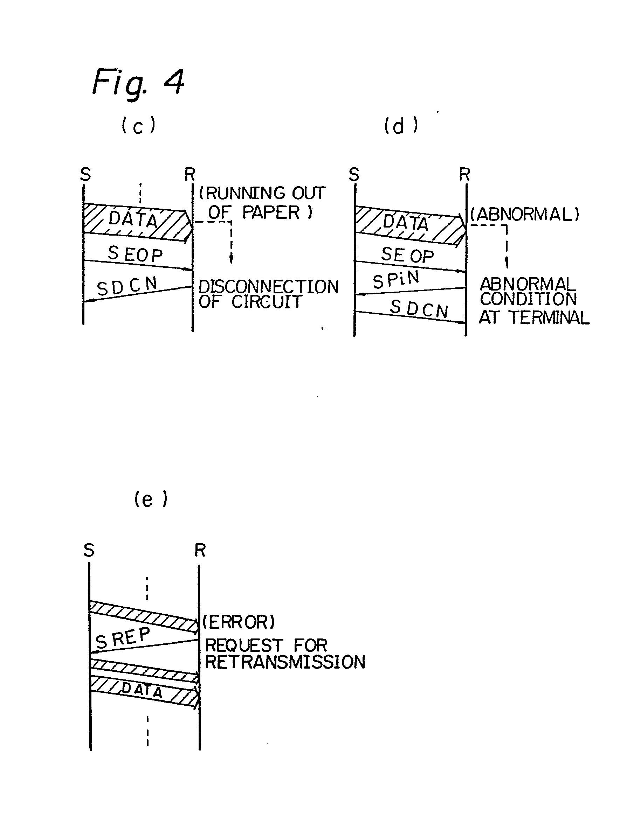

Referring to Fig. 4(a) to (e), Fig. 4(a) shows normal operation procedure, Fig. 4(b) shows an abnormal operation procedure of the terminal on the way transmission of the first page in the multi-page transmission, Fig. 4(c) shows the end procedure for the abnormal operation caused by running out of the receiving paper on the way transmission of the final page in the multi-page transmission, Fig. 4(d) shows an abnormal end operation procedure on the way transmission of the final page, and Fig. 4(c) shows the data retransmitting operation procedure caused by the occurrence of many errors in the image data. In the drawings, as mentioned in Fig. 1, the wavy arrow mark indicates the tonal signal, the slanted arrow mark indicates the data transmission based on the transmission speed of 9600 bps, and the straight arrow mark indicates the command code or response code based on the multifrequency (MF) signal. The reference letter "S" shows the transmitting side of the facsimile system, and "R" shows the receiving side of the facsimile system.

(a): Normal operation procedure

When the 16 Hz calling signal is transmitted from the S side to the R side, the R side responds to the S side by the response code SCED, indicating the setting of the circuit, and the receiving functions to show the paper size (A4 or B4) and receiving medium type (floppy disk or paper) with an MF signal type. The S side transmits the command code NSS indicating transmitting function, in succession, transmits the image data (DATA) without training after adding the check bit to every frame of the image data. The command code NSS is transmitted by the transmission speed of 9600 bps as well as the transmission speed of the image data using the series code method. For this reason, the facsimile system is provided with means for controlling and discriminating the image data and the command code NSS based on predetermined format (for example, first frame indicates NSS). Alternatively, it is possible to transmit NSS with an MF signal type. When the image data is normally received by the R side, the response code SREP for request for retransmission does not respond from the R side, and the S side judges it as normal transmission and continues to transmit one page's amount of the image data. After one page's amount of the image data come to an end, the S side transmits the command code SMPS in the case of multi-pages. The R side responds to the S side by the response code SMCF, indicating normal receiving. The S side transmits the image data of the next page, and transmits the command SEOP if the image data of the next page indicates the final page (transmits the command SMPS if the image data of the next page indicates a middle page). When the R side detects the command SEOP, the R side responds to the S side by the response code SDCN, indicating disconnection of the circuit. The R side can disconnect the circuit by themselves without the circuit disconnection command transmitted from the S side.

As mentioned above, the response code SCED according to the present invention has both functions indicating the response code NSF·DIS for receiving function and the response code CFR for completion of receiving preparation which conventional G3 transmission produres have. Moreover, the command code SEOP has both functions indicating the command code EOP for end of page and the command code SCDN for disconnection of the circuit which conventional G3 transmission have. It is possible to simplify the total transmission procedure by eliminating the training procedure.

(b): Abnormal operation or running out of the paper at the terminal on way transmission of the first page

When the S side transmits the first page of the multi-page, if the R side incurs an abnormal condition of the terminal or running out of the receiving paper, the R side responds to the S side by either the response code SPiN, indicating abnormal condition of the terminal, or the response code SPiP, indicating end of the receiving paper, corresponding to the multi-page command SMPS transmitted from the S side, and the R side waits the command SDCN indicating disconnection of the circuit transmitted from the S side, and the R side disconnects the circuit by themselves. Meanwhile, when the R side incurs an abnormal condition of the terminal or running out of the receiving paper on way transmission of the final page, the R side responds to the S side by SDCN or SPiN as shown in next (c), (d), and it is different from the (b) procedure. The S side discriminates the kinds of abnormal condition based on these command codes.

(c): Running out of the receiving paper on the way transmission of the final page

In this case, the R side responds to the S side by the response code SDCN as the response to the command SEOP indicating end of page shown in (a), and disconnects the circuit by themselves.

(d): Abnormal condition of the terminal on the way transmission of the final page

In this case, the R side responds to the S side by the response code SPiN indicating an abnormal condition at the terminal shown in (b) as the response to the command SEOP indicating end of page, and disconnects the circuit by themselves after the R side receives the command SDCN transmitted from the S side.

(e): Retransmission when the image data contains error

As mentioned above, the image data is transmitted with every frame unit. The size of each frame is determined by the generation ratio of the data error and the size of the K parameter, i.e., compression ratio of data, if many data errors occur, the size of each frame is operative as long as it is small, in the extreme case, one frame is constituted by one line. Meanwhile, in the point of view of the compression ratio, the size of each frame is operative as long as it is large, generally, it is selected by a size of about 1 K byte. When the R side detects the error in the frame which is received, the R side responds to the S side by the response code SREP, indicating a request for retransmission. The S side retransmits the image data after the data starting position to be transmitted is returned by one frame amount. The S side continues to transmit every frame unit data until the R side responds to the S side by the response code SREP.

When the R side detects the data error, error detection of the R side is performed by a conventional CRC method of error detection. Constitution and control of a page under each frame also are performed by conventional transmission techniques.

As mentioned above, the command and response code according to the embodiment of the present invention are transmitted by an MF type transmission signal. Analysis and control of the response code and generation of the command code are performed by the transmission control section 12 as well as a conventional facsimile system.

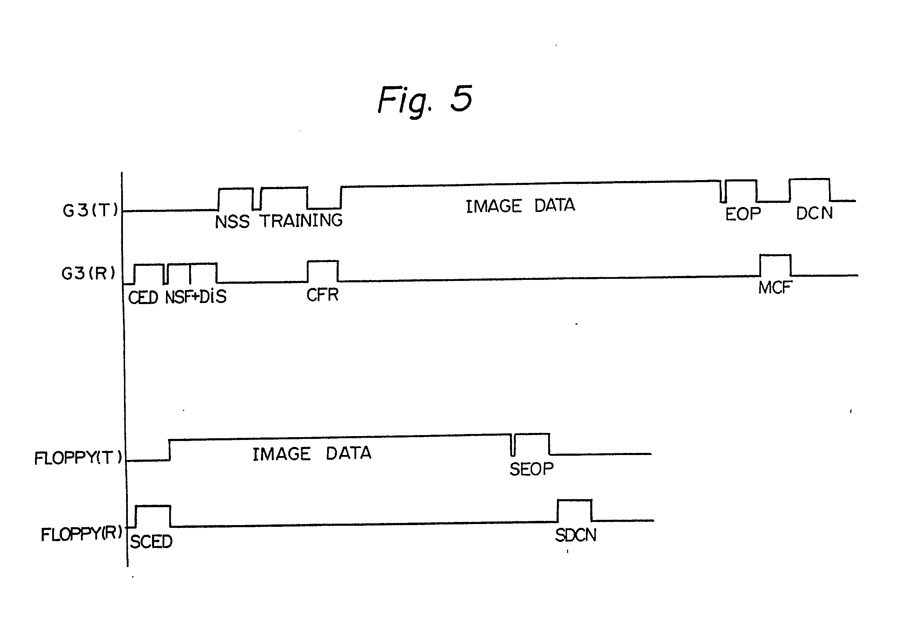

Referring to Fig. 5, the upper part of the drawing indicates the waveforms using the conventional G3 transmission procedure, and the lower part of the drawing indicates the waveforms according to the embodiment of the present invention. As can be seen from each waveform, in the case of the present invention, the starting procedure is considerably simplified. Moreover, since the image data also has the retransmitting function using the separated transmission method of every frame unit, the image data is enabled to have an unlimited K parameter for the MR data compression method, and the compression ratio of the data is improved considerably. As the result of these effects, the total transmission time can be shortened by approximately a half of the conventional G3 transmission time.

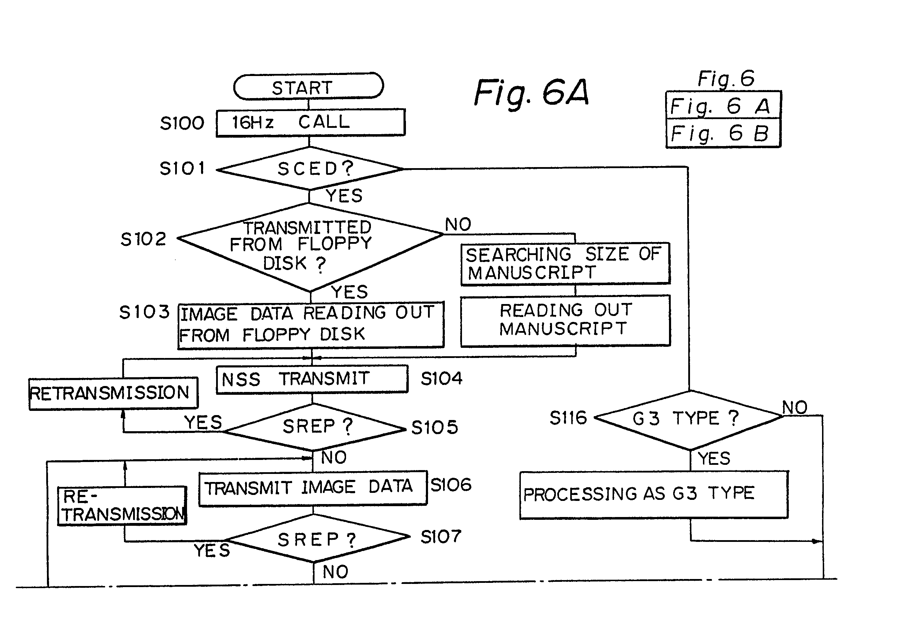

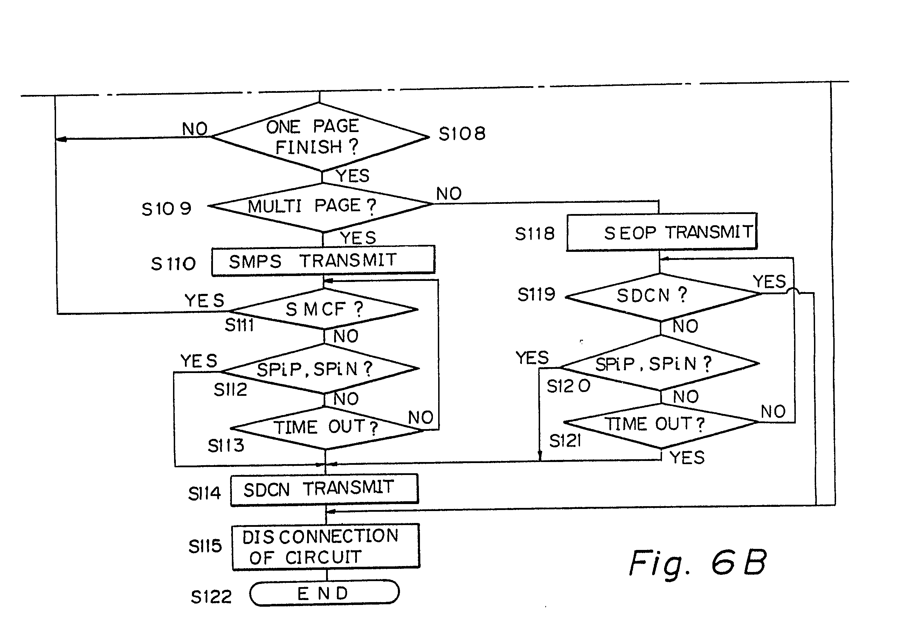

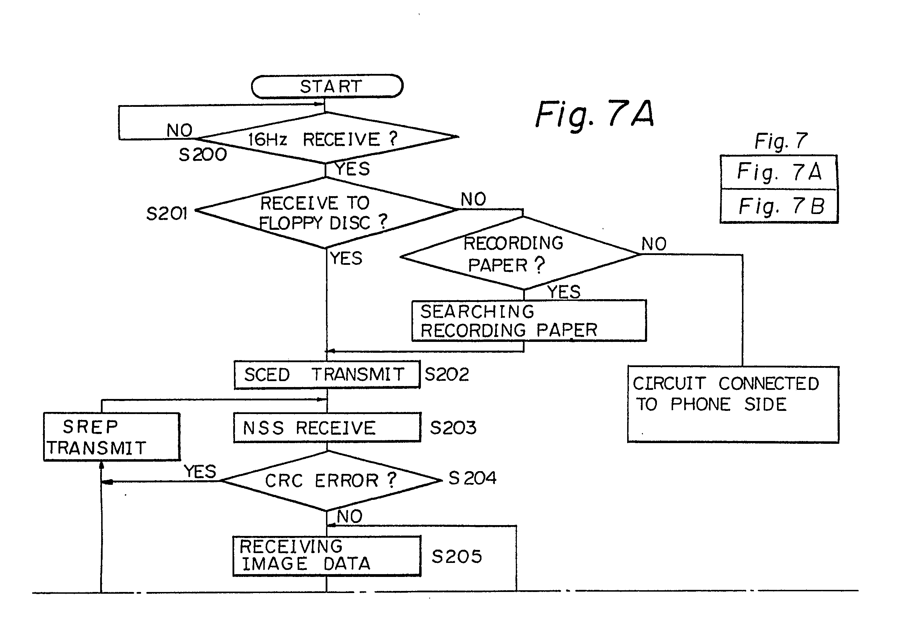

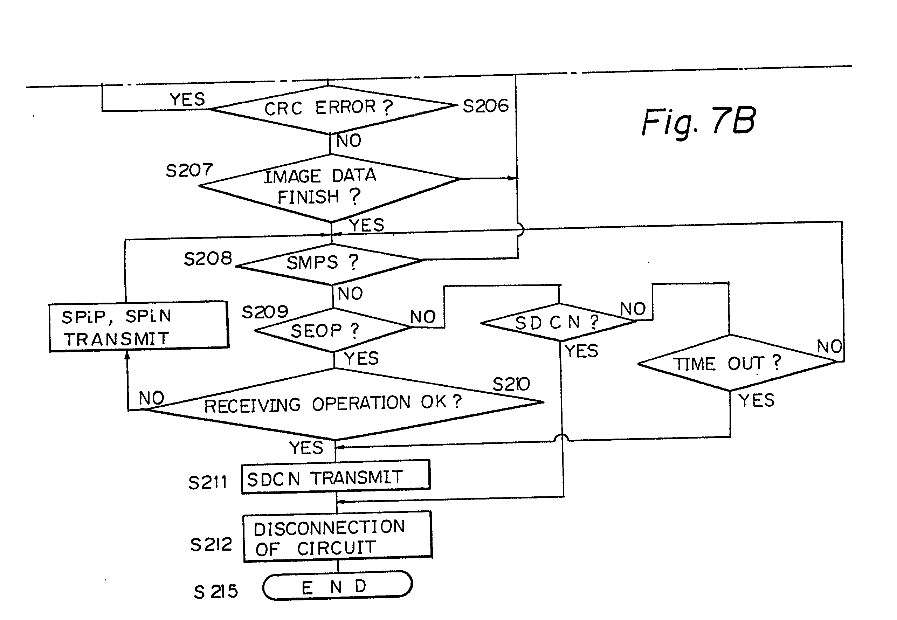

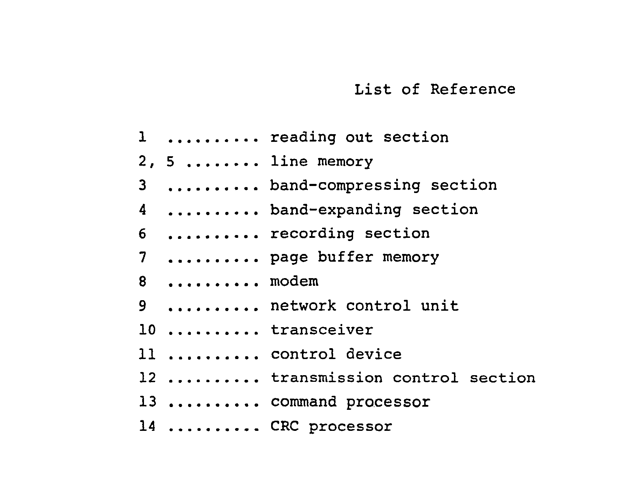

Figures 6 and 7 show the flowcharts of the transmission control procedure of the device shown in Fig. 3. Figure 6 shows the flowchart of the transmitting side, and Fig. 7 shows the flowchart of the receiving side facsimile system.

Referring to Fig. 6, the transmitting side (S) facsimile system transmits the 16 Hz calling signal (S100), waits for the response signal SCED responded from the receiving side (R) facsimile system, and judges whether the response signal is responded from the R side within the predetermined time (for example, within 3 seconds) (S101). If the R side facsimile system is used with a conventional type (G3 type), the transmission control section 12 selects the low speed modem, and the data is processed by the receiving section 122 and the transmitting section 123, as the conventional G3 type facsimile system (S116, S117). The S side judges whether the R side is used with the floppy disk or with paper (S102). In the case of the floppy disk, the S side performs to command the reading of the image data from the floppy disk (S103). Next, the S side transmits the command code NSS indicating the transmitting function of the non-standard operation (S104), in succession, transmits the image data (DATA) (S106), but if errors occur in the R side, the R side responds to the S side by the response code SREP (S105), the S side again transmits the command code NSS after the retransmission process (S104). On way the transmission of the image data, if the response code SREP is responded from the R side (S107), the S side transmits again from the frame in which the errors occurred. As the result, since the S side does not retransmit after finishing one page's amount of the image data transmission, it is possible to shorten the transmission time. When the transmission of one page's amount is finished, the S side transmits the command code SMPS indicating the multi-page (S110), the R side responds to the S side by the response code SMCF when the R side can receive normally (S111). If the abnormal condition occurs at the R side, the R side responds to the S side by the response code SPiP or SPiN indicating an abnormal condition at the terminal (S112). Meanwhile, when the transmission is finished with one page, the S side transmits the command code SEOP, indicating the end of page (S118), the R side responds to the S side by the response code SDCN, indicating disconnection of the circuit in a normal receiving condition (S114, S119).

Referring to Fig. 7, after the 16 Hz calling signal is received by the R side (S200), the R side judges whether receiving is to a floppy disk or paper (S201), and the response code SCED is transmitted to the S side (S202). The command code NSS transmitted from the S side is received by the R side (S203), the R side judges whether CRC errors are contained in the frame (S204), in succession, the image data is received by the R side (S205). When errors occur in the image data, the request for the retransmission from the frame in which the errors occurred is transmitted to the S side (S206), and the S side again transmits the frame to be retransmitted after the command code NSS is transmitted to the R side (S203). When the transmission of one page's amount is finished (S207), the response code SMPS indicating whether it is multi-page or not (S208), and when the transmission is finished, the command code SEOP, is transmitted by the S side (S209), the R side responds to the S side by the response code SDCN, indicating the disconnection of the circuit (S211). When the running out of the paper, or abnormal condition at the terminal occur, the response code SPiP or SPiN is transmitted to the S side, the R side responds to the S side by the response code SDCN indicating the disconnection of the circuit.

**Claims**

1. A method of controlling transmission of data in a facsimile system comprising a transmitting side facsimile device and a receiving side facsimile device, the method comprising causing (S100) the transmitting side facsimile device to transmit a calling signal for calling the receiving side facsimile device; causing the receiving side device to issue a response (SCED) signal indicating a receiving function and the completion of preparation by the receiving side to receive data; and when the transmitting side device receives the response signal within a predetermined time after the transmitting side transmitted the calling signal, causing (S104) the transmitting side facsimile device to transmit to the receiving side, in succession, a control signal (NSS) indicating a transmitting function and image data characterised in that the response signal (SCED) is constituted by a composite signal consisting of a plurality of frequencies.

2. A method according to claim 1, wherein the transmitting side facsimile device stores said image data in a buffer memory (7) prior to transmission, and, when the transmitting side receives the response signal (SCED), transmits, in succession, the control signal (NSS) indicating the transmitting function and the said image data read from the memory.

3. A method according to claim 2, wherein the transmitting side facsimile device transmits the stored data in portions, each portion being transmitted with a respective check code, the transmitting side facsimile device retransmitting a portion of data if it receives a retransmit signal (SREP) from the receiving side indicating that the portion of data just sent contained errors following a comparison with the check code.

4. A method according to any of claims 1 to 3, wherein when the transmitting side facsimile device does not receive the response signal (SCED) from the receiving side within the predetermined time after the transmitting side transmitted the calling signal, the transmitting side facsimile device transmits the control signal (NSS) indicating the transmitting function.

5. A method according to any of the preceding claims, wherein the response signal (SCED) has two frequencies selected from respective groups of low and high frequencies.

6. A method according to claim 5, wherein the group of low frequencies consists of four frequency bands and the group of high frequencies consists of three frequency bands.

7. A method according to any of the preceding claims, wherein the response signal (SCED) indicates one or more of the receiving side facsimile device paper size and receiving medium type.

8. A method according to any of the preceding claims, wherein when the receiving side receives an end signal (SEOP) indicating the end of the transmitting image data transmitted from the transmitting side, the receiving side responds to the transmitting side with a signal (SDCN) indicating a disconnection of the circuit and disconnects the circuit from the transmitting side facsimile device.

9. A facsimile transmission and receiving device comprising a reading section (1-3) for reading an image to be transmitted, for storing it temporarily and for band-compressing data representing the image based on a predetermined compression method to generate transmitting image data, a receiving recording section (4-6) for band-expanding received image data and for storing it temporarily and for recording it as the received image, a buffer memory (7) for storing the transmitting image data and the received image data one page at a time, a modem (8) for transmitting the image data from the buffer memory (7) to a circuit coupled with a remote device or from the circuit to the buffer memory (7) under a predetermined transmission speed, a network control unit (9) for controlling circuit connection, circuit disconnection, and automatic dialling, and a control device (12-14) for detecting transmission errors and for generating and processing command and response signals for controlling the transmitting and receiving of data, characterised in that the device further comprises an MF transceiver (10) for handling response signals in the form of a composite signal consisting of a plurality of frequencies.

**Patentansprüche**

1. Verfahren zur Steuerung der Transmission von Daten in einem Facsimilesystem mit einer sendeseitigen Facsimilevorrichtung und einer empfangsseitigen Facsimilevorrichtung, welches Verfahren umfaßt: Bewirken (S100), daß die sendeseitige Facsimilevorrichtung ein Rufsignal aussendet, um die empfangsseitige Facsimilevorrichtung zu rufen; Bewirken, daß die empfangsseitige Vorrichtung ein Antwortsignal (SCED) ausgibt, welches die Empfangsfunktion und die Beendigung der Vorbereitung zum Empfang von Daten durch die Empfangsseite anzeigt; und, wenn die sendeseitige Vorrichtung das Antwortsignal innerhalb einer vorbestimmten Zeit nach dem sendeseitigen Aussenden des Rufsignals das Antwortsignal empfängt, Bewirken (S104), daß die sendeseitige Facsimilievorrichtung an die Empfangsseite, nacheinander, ein Steuersignal (NSS), welches eine Sendefunktion anzeigt, und Bilddaten sendet, dadurch gekennzeichnet, daß das Antwortsignal (SCED) durch ein zusammengesetztes Signal gebildet wird, welches aus einer Vielzahl von Frequenzen besteht.

2. Verfahren nach Anspruch 1, bei dem die sendeseitige Facsimilevorrichtung die genannten Bilddaten in einem Pufferspeicher (7) vor der Sendung speichert, und, wenn die Sendeseite das Antwortsignal (SCED) empfängt, nacheinander das Steuersignal (NSS), welches die Sendefunktion antreibt, und die genannten Bilddaten, die von dem Speicher gelesen werden, sendet.

3. Verfahren nach Anspruch 2, bei dem die sendeseitige Facsimilevorrichtung die gespeicherten Daten in Abschnitten sendet, wobei jeder Abschnitt mit einem jeweiligen Prüfcode gesendet wird, die sendeseitige Facsimilevorrichtung einen Teil der Daten nochmals sendet, falls sie ein Nochmals-Sendesignal (SREP) von der Empfangsseite empfängt, welches anzeigt, daß ein Teil der gerade gesendeten Daten Fehler enthält, nach einem Vergleich mit dem Prüfcode.

4. Verfahren nach einem der Ansprüche 1 bis 3, bei dem dann, wenn die sendeseitige Facsimilevorrichtung innerhalb der vorbestimmten Zeit nachdem die Sendeseite das Rufsignal gesendet hat, das Antwortsignal (SCED) von der Empfangsseite nicht empfängt, die sendeseitige Facsimilevorrichtung das Steuersignal (NSS) sendet, welches die Sendefunktion anzeigt.

5. Verfahren nach einem der vorhergehenden Ansprüche, bei dem das Antwortsignal (SCED) zwei Frequenzen hat, ausgewählt aus jeweiligen Gruppen von hohen und niedrigen Frequenzen.

6. Verfahren nach Anspruch 5, bei dem die Gruppe der niedrigen Frequenzen aus vier Frequenzbändern besteht und die Gruppe der hohen Frequenzen aus drei Frequenzbändern besteht.

7. Verfahren nach einem der vorhergehenden Ansprüche, bei dem das Antwortsignal (SCED) einen oder mehrere Werte wie Papiergröße und Empfangsmedientyp der empfangsseitigen Facsimilevorrichtung anzeigt.

8. Verfahren nach einem der vorhergehenden Ansprüche, bei dem die Empfangsseite ein Endsignal (SEOP) empfängt, welches das Ende des Sendens von Bilddaten von der Sendeseite anzeigt, wobei die Empfangsseite der Sendeseite mit einem Signal (SDCN) antwortet, welches eine Trennung der Schaltung anzeigt, und die Schaltung von der sendeseitigen Facsimilevorrichtung trennt.

9. Facsimilesende- und -empfangsvorrichtung mit einem Leseabschnitt (1-3) zum Lesen eines zu übertragenden Bildes, um es temporär zu speichern und zur Bandbreitenkompression von Daten, die das Bild darstellen, basierend auf einem vorbestimmten Kompressionsverfaren, um zu übertragende Bilddaten zu generieren, und einem Empfangsaufzeichnungsabschnitt (4-6) zur Bandbreitenexpansion der empfangenen Bilddaten und um sie temporär zu speichern und um sie als empfangenes Bild aufzuzeichnen, einem Pufferspeicher (7) zum Speichern der sendenden Bilddaten und der empfangenen Bilddaten, jeweils eine Seite zu einer Zeit, einem Modem (8) zum Senden der Bilddaten von dem Pufferspeicher (7) zu einer Schaltung, die mit einer entfernten Vorrichtung gekoppelt ist, oder von der Schaltung zu dem Pufferspeicher (7), mit einer vorbestimmten Sendegeschwindigkeit, einer Netzwerksteuereinheit (9) zum Steuern der Schaltungsverbindung, der Schaltungstrennung und der automatischen Wahl, und einer Steuervorrichtung (12-14) zum Detektieren von Sendefehlern und zum Ezeugen und Verarbeiten von Befehls- und Antwortsignalen zum Steuern des Sendens und des Empfangens von Daten, dadurch gekennzeichnet, daß die Vorrichtung ferner ein MF-Sende-Empfangsgerät (10) umfaßt, zur Handhabung von Antwortsignalen in Form eines zusammengesetzten Signales, welches aus einer Vielzahl von Frequenzen besteht.

## Revendications

1. Un procédé pour commander la transmission des données dans un système de télécopie comprenant un dispositif de télécopie du côté émetteur et un dispositif de télécopie du côté récepteur, le procédé comprenant les opérations suivantes: on commande (S100) au dispositif de télécopie du côté émetteur d'émettre un signal d'appel pour appeler le dispositif de télcopie du côté récepteur; on commande au dispositif du côté récepteur d'émettre un signal de réponse (SCED) indiquant une fonction de réception et l'achèvement de la préparation pour la réception de données par le côté récepteur; et lorsque le dispositif du côté émetteur reçoit le signal de réponse au cours d'un intevalle de temps prédéterminé aprés que le côté émetteur a émis le signal d'appel, on commande (S104) au dispoitif de télécopie du côté émetteur d'émettre vers le côté récepteur un signal de commande (NSS) indiquant une fonction d'émission suivi par des données d'image, caractérisé en ce que le signal de réponse (SCED) est constitué par un signal composite qui consiste en un ensemble de fréquences.

2. Un procédé selon la revendication 1, dans lequel le dispositif de télécopie du côté émetteur mémorise les données d'image dans une mémoire tampon (7) avant la transmission, et lorsque le côté émetteur reçoit le signal de réponse (SCED), il émet successivement le signal de commande (NSS) indiquant la fonction d'émission et les données d'image qui sont lues dans la mémoire.

3. Un procédé selon la revendication 2, dans lequel le dispositif de télécopie du côté émetteur émet par parties les données qui sont mémorisées, chaque partie étant émise avec un code de contrôle respectif, et le dispositif de télécopie du côté émetteur réémet une partie des données s'il reçoit un signal de réémission (SREP) provenant du côté récepteur et indiquant que la partie de données qui vient d'être émise contient des erreurs, à la suite d'une comparaison avec le code de contrôle.

4. Un procédé selon l'une quelconque des revendications 1 à 3, dans lequel lorsque le dispositif de télécopie du côté émetteur ne reçoit pas le signal de réponse (SCED) provenant du côté récepteur pendant l'intervalle de temps prédéterminé après que le côté émetteur a émis le signal d'appel, le dispositif de télécopie du côté émetteur émet le signal de commande (NSS) indiquant la fonction d'émission.

5. Un procédé selon l'une quelconque des revendications précédentes, dans lequel le signal de réponse (SCED) comprend deux fréquences qui sont sélectionnées dans des groupes respectifs de fréquences basses et hautes.

6. Un procédé selon la revendication 5, dans lequel le groupe de fréquences basses comprend quatre bandes de fréquences et le groupe de fréquences hautes comprend trois bandes de fréquences.

7. Un procédé selon l'une quelconque des revendications précédentes, dans lequel le signal de réponse (SCED) indique une ou plusieurs informations parmi le format de papier et le type de support de réception du dispositif de télécopie du côté récepteur.

8. Un procédé selon l'une quelconque des revendications précédentes, dans lequel lorsque le côté récepteur reçoit un signal de fin (SEOP) indiquant la fin des données d'image d'émission qui sont émises par le côté émetteur, le côté récepteur répond au côté émetteur avec un signal (SDCN) indiquant une déconnexion du circuit, et il déconnecte le circuit vis-à-vis du dispositif de télécopie du côté émetteur.

9. Un dispositif d'émission et de réception de télécopie comprenant une section de lecture (1-3) pour lire une image à émettre, pour la mémoriser temporairement et pour effectuer une compression de bande sur des données représentant l'image, sur la base d'un procédé de compression prédéterminé, pour produire des données d'image d'émission, une section d'enregistrment de réception (4-6) pour effectuer une expansion de bande sur des données d'image reçues et pour les mémoriser temporairement et pour les enregistrer sous la forme de l'image reçue, une mémoire tampon (7) pour mémoriser les données d'image d'émission et les données d'image reçues, une page à la fois, un modem (8) pour émettre les données d'image de la mémoire tampon (7) vers un circuit qui est connecté à un dispositif éloigné, ou du circuit vers la mémoire tampon (7), avec une vitesse de transmission prédéterminée, une unité de commande de réseau (9) pour commander la connexion du circuit, la déconnexion du circuit et la numérotation automatique, et un dispositif de commande (12-14) pour détecter des erreurs de transmission et pour produire et traiter des signaux d'ordre et de réponse dans le but de commander l'émission et la réception de données, caractérisé en ce que ce dispositif comprend en outre un émetteur-récepteur multifréquence (10) prévu pour travailler sur des signaux de réponse se présentant sous la forme d'un signal composite consistant en un ensemble de fréquences.

EP 0 116 650 B1

# Fig. 1

(a)

```
S              R
    16Hz            INDICATING
  2100Hz          ⎰ RECEIVING
  CED             ⎱ FUNCTION
  NSF·DiS           INDICATING
  NSS or DCS      ⎰ TRANSMITTING
                  ⎱ FUNCTION
  ////////// →    TRAINING
  CFR             ⎰ COMPLETION
                    OF RECEIVING
                    PREPARATION
  / DATA /
  M P S             MULTI-PAGE
  M C F             NORMAL
                    RECEIVING
  / DATA /
  E O P             END OF PAGE
  M C F             NORMAL
                    RECEIVING
  D C N             DISCONNECTION
                    OF CIRCUIT
```

(b)

```
S              R
    16Hz
  CED
  NSF·DiS
  NSS or DCS
  //////// →      TRAINING
  CFR
  / DATA /        (RUNNING OUT
                   OF PAPER)
  M PS
  PiN               ABNORMAL
                    CONDITION
                    AT TERMINAL
  PRi − EOP
  or PRi−MPS
  D C N
  ABNORMAL
```

# Fig. 1

(c)

TRAINING NG

(d)

Fig. 2

EP 0 116 650 B1

# Fig. 3A

4

# Fig. 3B

# Fig. 3C

# Fig. 4

(a)

(b)

S     R

16Hz — INDICATING RECEIVING FUNCTION

SCED →

NSS → INDICATING TRANSMITTING FUNCTION

DATA → IMAGE DATA

SMPS → MULTI PAGE

SMCF → NORMAL RECEIVING

DATA → IMAGE DATA

SEOP → END OF PAGE

SDCN → DISCONNECTION OF CIRCUIT

S     R

16Hz —

SCED → (ABNORMAL RUNNING OUT OF PAPER)

NSS →

DATA →

SMPS →

SPiN(SPiP) → ABNORMAL CONDITION AT TERMINAL

SDCN → (PAPER END)

# Fig. 4

(c)

(d)

(e)

Fig. 5

G3(T)

NSS TRAINING    IMAGE DATA    EOP    DCN

G3(R)

CED NSF+DiS    CFR    MCF

FLOPPY(T)

IMAGE DATA    SEOP

FLOPPY(R) SCED    SDCN

EP 0 116 650 B1

## Fig. 6A

**Fig. 6**

| Fig. 6 A |
|----------|
| Fig. 6 B |

```
                    ┌─────────────┐
                    │   START     │
                    └──────┬──────┘
            ┌──────────────┴──────────────┐
  S100      │    16Hz   CALL              │
            └──────────────┬──────────────┘
                           │
  S101           ◇ SCED? ◇ ──────────────────────────┐
                      │ YES                           │
            ◇ TRANSMITTED  ◇ ── NO ──┐                │
  S102      ◇ FROM FLOPPY  ◇         │                │
            ◇   DISK ?     ◇   ┌──────────────────┐   │
                  │ YES        │ SEARCHING SIZE OF│   │
  S103 ┌─────────────────────┐ │ MANUSCRIPT       │   │
       │IMAGE DATA READING OUT│ └─────────┬────────┘   │
       │FROM FLOPPY DISK      │ ┌──────────────────┐   │
       └──────────┬──────────┘ │ READING OUT      │   │
                  │            │ MANUSCRIPT       │   │
┌──────────────┐  │            └─────────┬────────┘   │
│RETRANSMISSION│  ├────────────────────────┘          │
└──────┬───────┘  │ ┌──────────────────┐              │
       │          │ │ NSS  TRANSMIT    │ S104         │
       │          └─┤                  │              │
       │            └────────┬─────────┘              │
       │  YES              ◇ SREP ? ◇ S105    S116 ◇ G3 TYPE ? ◇ ── NO ──┐
       │   └──────────────────┤ NO                        │ YES         │
┌──────────────┐   ┌──────────────────┐  ┌──────────────────────┐       │
│ RE-          │   │TRANSMIT IMAGE DATA│S106 │PROCESSING AS G3 TYPE│      │
│ TRANSMISSION │   └────────┬─────────┘  └──────────┬───────────┘       │
└──────┬───────┘            │                       │                   │
       │  YES             ◇ SREP ? ◇ S107           │                   │
       └────────────────────┤ NO                    └───────────────────┘
```

NO — ONE PAGE FINISH ? — S108

YES

S109 — MULTI PAGE ? — NO

YES

S110 — SMPS TRANSMIT

S118 — SEOP TRANSMIT

YES — SMCF ? — S111

NO

S119 — SDCN ? — YES

NO

YES — SPiP, SPiN ? — S112

NO

YES — SPiP, SPiN ? — S120

NO

TIME OUT ? — NO — S113

TIME OUT ? — NO — S121

YES

S114 — SDCN TRANSMIT

S115 — DISCONNECTION OF CIRCUIT

S122 — END

*Fig. 6B*

Fig. 7A

Fig. 7

| Fig. 7A |
| Fig. 7B |

START

16Hz RECEIVE ? — NO
S200
YES

RECEIVE TO FLOPPY DISC ? — NO
S201
YES

RECORDING PAPER ? — NO
YES

SEARCHING RECORDING PAPER

SCED TRANSMIT | S202

SREP TRANSMIT

NSS RECEIVE | S203

CIRCUIT CONNECTED TO PHONE SIDE

CRC ERROR ? — YES
S204
NO

RECEIVING IMAGE DATA | S205

EP 0 116 650 B1

Fig. 7B

S206 CRC ERROR ?
YES
NO

S207 IMAGE DATA FINISH ?
YES
NO

S208 SMPS ?
NO

S209 SEOP ?
NO
YES

SPiP, SPiN TRANSMIT

S210 RECEIVING OPERATION OK ?
NO
YES

SDCN ?
YES
NO

TIME OUT ?
NO
YES

S211 SDCN TRANSMIT

S212 DISCONNECTION OF CIRCUIT

S 215 E N D

List of Reference

| | |
|---|---|
| 1 | reading out section |
| 2, 5 | line memory |
| 3 | band-compressing section |
| 4 | band-expanding section |
| 6 | recording section |
| 7 | page buffer memory |
| 8 | modem |
| 9 | network control unit |
| 10 | transceiver |
| 11 | control device |
| 12 | transmission control section |
| 13 | command processor |
| 14 | CRC processor |